# EUROPÄISCHE PATENTANMELDUNG

(11) **EP 2 305 623 A1**
(43) Veröffentlichungstag der Anmeldung: **06.04.2011**
(21) Anmeldenummer: 09168061.1
(22) Anmeldetag: 18.08.2009
(51) Int. Cl.: C05F 5/00, C05F 11/00

(54) **Kakaoschalenpulver**

(71) Anmelder: Bräutigam, Theresia U., 40721 Hilden (DE)
(72) Erfinder: Bräutigam, Theresia, 40721 Hilden (DE)
(74) Vertreter: Claessen, Rolf

(57) **Zusammenfassung**

Die Erfindung betrifft die Verwendung von Pulver aus Kakaoschalen als Dünger, eine Kompostzusammensetzung mit diesem Pulver aus Kakaoschalen, ein Kultursubstrat mit der Kompostzusammensetzung sowie eine Erdzusammensetzung mit der Kompostzusammensetzung.
Das Pulver weist zu wenigstens 5 Gewicht % eine Korngröße von bis zu 5 mm auf. Die Kompostzusammensetzung enthält wenigstens 0.5 Gewicht % Pulver aus Kakaoschalen, wobei das Pulver zu wenigstens 20 Gewicht % eine Korngröße von bis zu 5 mm aufweist.

## Beschreibung

Die Erfindung betrifft die Verwendung von Pulver aus Kakaoschalen als Dünger, einen Dünger selbst, eine Kompostzusammensetzung mit diesem Pulver aus Kakaoschalen, ein Kultursubstrat mit der Kompostzusammensetzung sowie eine Erdzusammensetzung mit der Kompostzusammensetzung.

Bislang wurden gebrochene Kakaoschalen als Mulch eingesetzt. Dabei wurden Beete mit gebrochenen Kakaoschalen bestreut. Damit wurde vor allem das Ziel verfolgt, Schnecken fernzuhalten und Wildkräuter zu unterdrücken. Die bislang bekannten gebrochenen Kakaoschalen fallen auch in Größenfraktionen bis zu 25 mm an. Bei der bisherigen Kakaoschalen-Brechung fällt verhältnismäßig wenig Staub an - jedoch ein sehr hoher Grobanteil. So haben bislang erhältliche gebrochene Kakaoschalen einen Anteil von mehr als 99,5 Gew.% Teilchen mit einer Korngröße von mehr als 5 mm.

DE 696 08 308 T2 beschreibt ein Basismaterial, Pflanzenwachstumsmedium und Düngemittel auf der Basis von Milchabfallprodukten und ein Verfahren zu dessen Herstellung, wobei auch dem Torfanteil Kakaoschalen hinzugefügt werden können.

Die bislang bekannten aufgestreuten relativ groben gebrochenen Kakaoschalen benötigen typischerweise bis zu drei Jahre, um als organische Dünger zu wirken und die Nährstoffe an den Boden abzugeben. Somit können die bisher vorhandenen Kakaoschalen die nötigen Nährstoffe nicht in der Kulturzeit zur Verfügung stellen, da nach den aktuellen Erkenntnissen der Erfinder etwa 1 mm Kakaoschale in etwa 1 bis 1,5 Monaten vom Bodenleben umgesetzt wird, abhängig vom aktiven Bodenleben. Zusätzlich ist die Ausbringmenge begrenzt, da sehr schnell durch die zu groben Kakaoschalen ein Verspecken des Bodens mit der einhergehenden Überforderung des Bodenlebens droht.

Zudem war es bislang immer notwendig, Salz-Kalidünger einzusetzen, um die für die Pflanzen notwenigen Kaliumverbindungen bereitzustellen. Dieser wurde bei bisherigen organischen Düngern diesen beigesetzt oder musste separat ausgebracht werden.

Aufgabe der vorliegenden Erfindung ist es also, einen Dünger bereitzustellen, der zum einen ohne jeglichen Salzdüngerzusatz auskommt und zum anderen Nährstoffe, NPK-Dünger (Stickstoff , Phosphat, Kalium), Mg und Spurenelemente möglichst rasch an den Boden und die Pflanze abgeben kann, egal wie lange die Kulturzeit dauert.

In einer ersten Ausführungsform wird diese der Erfindung zugrunde liegende Aufgabe gelöst durch die Verwendung von Pulver aus Kakaoschalen als Dünger, wobei das Pulver zu wenigstens 5 Gew.% eine Korngröße von bis zu 5 mm aufweist. Diese Verwendung kann ihre Vorteile besonders beispielsweise bei Stauden und Gräbern ausspielen.

Durch den hohen Kaliumgehalt von Kakaoschalen und hohem Gehalt anderer Nährstoffe und Vielzahl von Spurenelementen kann durch die erfindungsgemäße Verwendung ein Dünger bereitgestellt werden, der ganz ohne Salzzusatz auskommt. Zudem wurde überraschend festgestellt, dass durch die erfindungsgemäße Verwendung das Pulver aus Kakaoschalen mit der erfindungsgemäßen Korngröße die Nährstoffe innerhalb weniger Tage an den Boden oder die Pflanze abgeben kann. Diese enorme Beschleunigung der Nährstoffabgabe war vollkommen überraschend. Durch die sehr fein gemahlenen Kakaoschalen ist ein rein organischer Dünger ohne Salzbelastung und ohne Stickstoffentzug möglich. Die bislang als Mulch eingesetzten relativ grob gebrochenen Kakaoschalen mussten zunächst vom Bodenleben über Monate und Jahre zersetzt werden, bevor sie Wirkung entfalten konnten. Die Körnung über 7 mm stand beispielsweise nie im gleichen Jahr zur Verfügung. Es wurde nun überraschend gefunden, dass die recht fein gemahlenen erfindungsgemäßen Kakaoschalen ohne intaktes Bodenleben dennoch ihre Wirkung als Dünger entfalten können.

Vorzugsweise sind die erfindungsgemäßen Kakaoschalen in den Boden bzw. das Substrat oder den Kompost eingearbeitet und nicht lediglich aufgestreut. Vorteilhafterweise sind daher wenigstens 80 Gew.% der eingesetzten erfindungsgemäßen Kakaoschalen nicht an der Oberfläche des Bodens bzw. des Komposts oder des Substrats vorgesehen. Überraschend wurde festgestellt, dass auf diese Weise die Nährstoffe besonders schnell in den Boden oder die Pflanze gelangen. Alternativ kann der erfindungsgemäße Dünger aber auch zum Abstreuen beispielsweise von Kulturflächen, Gräbern, Containern, Balkonkästen, Pflanzkübeln und Rasenflächen verwendet werden.

Das erfindungsgemäße Pulver aus Kakaoschalen weist vorteilhafterweise wenigstens 20 Gew.%, bevorzugt 30 Gew.%, besonders bevorzugt wenigstens 50 Gew.% Kakaoschalen mit der erfindungsgemäßen Korngröße auf. Unabhängig davon beträgt die Korngröße der vorgenannten erfindungsgemäßen Gewichtsanteile des Pulvers aus Kakaoschalen bis zu 4 mm, besonders bevorzugt bis zu 2 mm. Hierdurch wurde nochmals eine erhebliche Beschleunigung der Nährstoffabgabe in den Boden oder die Pflanze beobachtet und es ist bei gleicher Wirkung eine geringere Anwendungsdosis möglich.

In einer weiteren Ausführungsform wird die der Erfindung zugrunde liegende Aufgabe gelöst durch einen Dünger, enthaltend Pulver aus Kakaoschalen, wobei das Pulver zu wenigstens 5 Gew.% eine Korngröße von bis zu 5 mm aufweist. Gegenüber bisher bekannten Düngern kommt dieser erfindungsgemäße Dünger ohne Salzzusatz aus und entfaltet seine Wirkung erstaunlich schnell, wie dies bereits weiter oben dargelegt wurde.

In einer weiteren Ausführungsform wird die der Erfindung zugrunde liegende Aufgabe gelöst durch eine Kompostzusammensetzung, enthaltend
a) Frischkompost, Fertigkompost oder Substratkompost, und
b) wenigstens 0,5 Gew.% Pulver aus Kakaoschalen, wobei das Pulver zu wenigstens 20 Gew.% eine Korngröße von bis zu 5 mm aufweist.

Vorzugsweise sind die erfindungsgemäßen Kakaoschalen in den Boden bzw. das Substrat oder den Kompost eingearbeitet und nicht lediglich aufgestreut. Vorteilhafterweise sind daher wenigstens 80 Vol.% der eingesetzten erfindungsgemäßen Kakaoschalen nicht an der Oberfläche des Bodens bzw. des Komposts oder des Substrats. Überraschend wurde festgestellt, dass auf diese Weise die Nährstoffe besonders schnell in den Boden oder die Pflanze gelangen und den Wurzeln zur Verfügung stehen.

Das erfindungsgemäße Pulver aus Kakaoschalen weist vorteilhafterweise wenigstens 30 Gew.%, besonders bevorzugt wenigstens 50 Gew.% Kakaoschalen mit der erfindungsgemäßen Korngröße auf. Unabhängig davon beträgt die Korngröße der vorgenannten erfindungsgemäßen Gewichtsanteile des Pulvers aus Kakaoschalen bis zu 4 mm, besonders bevorzugt bis zu 2 mm. Hierdurch wurde nochmals eine erhebliche Beschleunigung der Nährstoffabgabe in den Boden beobachtet. Vor allem bei schnellwachsenden Kulturen wie beispielsweise Gemüse ist ein Anteil von bis zu 2 mm von besonderem Vorteil. Je nach Nährstoffbedarf kann die Kultur damit alle 2 bis 5 Wochen nachgestreut werden. Vor allem vorteilhaft ist, wenn ein hoher Staubanteil von Kakaoschalen enthalten ist (also mehr als 1 Gew.% mit einer Korngröße von bis zu 1µm).

Beispielsweise kann in der Kompostzusammensetzung auch wenigstens 1 Gew.% Pulver aus Kakaoschalen, insbesondere 6 Gew.% Pulver aus Kakaoschalen enthalten sein. Der Nährstoffgehalt des Kompostes wird dadurch auf natürliche Weise gesteigert. Die Wirkung der Kompostzusammensetzung kann dadurch erheblich verbessert werden.

Zusätzlich können in der Kompostzusammensetzung vorteilhafterweise auch gemahlene Kakaoschalen mit einer Korngröße von mehr als 5 mm bis zu 8 mm in einem Bereich von 5 bis 30 Gew.% enthalten sein. Die etwas gröberen Kakaoschalen werden von dem Bodenleben langsamer zersetzt und wirken so als Depot für Nährstoffe, die durch die langsame Zersetzung innerhalb von mehreren Monaten kontinuierlich abgegeben werden. Ein gezieltes Nachdüngen während der Kultur mit Kakaoschalen in den erfindungsgemäßen Korngrößen wird dadurch nicht ersetzt sondern ist die Lösung zur optimalen Ernährung.

Die erfindungsgemäße Kompostzusammensetzung enthält vorzugsweise wenigstens 0,2 Gew.%, insbesondere wenigstens 0,5 Gew.% silikatische Mineralien, insbesondere gemahlenen ultrabasischen Granit oder gemahlenen kristallinen Diabas. So wird das Bodenleben zusätzlich aktiviert.

Vorzugsweise enthält die erfindungsgemäße Kompostzusammensetzung auch wenigstens 0,2 Gew.% Calciumhydroxid, gegebenenfalls mit Kieselsäure. Auch hierdurch kann unter anderem ein stabilerer pH-Wert eingestellt werden.

Vorteilhafterweise enthält die erfindungsgemäße Kompostzusammensetzung auch wenigstens 1 Gew.% mikroporösen Ton, der in flüssiger Form beispielsweise als Aufschlämmung ausgebracht werden kann. Dieser mikroporöse Ton kann auch beispielsweise mit Kieselalgen behandelt oder versetzt sein.

Der Salzgehalt der erfindungsgemäßen Kompostzusammensetzung beträgt vorteilhafterweise höchstens 2,4 g/l insbesondere höchstens 2 g/l, ganz besonders bevorzugt höchstens 1,5 g/l. Ein derart niedriger Salzgehalt hat den Vorteil, dass die Kompostzusammensetzung praktisch rein organischer Natur sein kann. Die für die Pflanzen notwendigen Kaliumverbindungen können organisch, nämlich wie bereits beschrieben von dem Pulver der Kakaoschalen bereitgestellt werden. Bisherige Dünger haben den Nachteil, dass ein wesentlich höherer Salzgehalt notwendig ist, um die Mineralstoffe den Pflanzen zur Verfügung zu stellen.

Durch den Einsatz des Pulver der Kakaoschalen können erstmals Kultur-Substrate und Hobbyerden mit beispielsweise 55 bis 65 Vol.% erfindungsgemäßem Kompost hergestellt werden. Dies ist erst durch den besonders niedrigen Salzgehalt des erfindungsgemäßen Komposts möglich. Ein noch höherer Prozentsatz wäre möglich, wird aber durch das hohe Transportgewicht unpraktikabel. Zusätzlich haben diese Kultur-Substrate und Hobbyerden einen höheren Gehalt an Nährstoffen und Spurenelementen als bisherige Substrate und Erden durch den Einsatz des Pulvers der Kakaoschalen. Bisher erhältlich ist nämlich lediglich Substratkompost mit einem niedrigst bekannten Salzgehalt von etwa 2,5 g/l. Daher kann bislang in Kultur-Substrate nur etwa 20 bis 30 Vol.% Substratkompost beigemischt werden.

Durch den sauren Regen ist flächendeckend der pH-Wert gesunken und durch Salzdünger, Pflanzenschutzmittel sind die Cyano-Bakterien zusätzlich unter Stress und produzieren nicht mehr Sauerstoff sondern toxische Schleime. Dies ist sichtbar am Vermoosen von Rasen und Vergrünen der Bäume und Sträucher. Diese Schleime belasten auch die Böden. Durch die erfindungsgemäße bevorzugte Kombination des Pulvers der Kakaoschalen mit dem Granitmehl bzw. Calciumhydroxid und andererseits dem mikroporösen Ton können die Böden wieder reaktiviert werden und Bodenleben reetabliert werden. Dadurch können wirksam die toxisch belastenden Schleime beseitigt werden und der pH-Wert oberhalb von 6 stabilisiert werden. Die Cyano-Bakterien produzieren dann nicht mehr die toxischen Schleime, sondern wieder Sauerstoff. Der Boden wird dadurch lockerer und krümeliger. Die vielen Ursachen der Bodenprobleme werden durch die erfindungsgemäße Kombination beseitigt, die festgesetzten Nährstoffe wieder freigesetzt und in Zukunft nicht mehr festgelegt. Durch die erfindungsgemäße Kompostzusammensetzung kann auch rein organisch gedüngt werden, ohne dass Pflanzenschutzmittel eingesetzt werden müssen, da die Ernährung mit Spurenelementen stimmt, ohne beispielsweise neue Belastungen wie beispielsweise durch Salz in Kauf nehmen zu müssen.

Beispielsweise kann man während der Kultur mit dem erfindungsgemäßen Kakaoschalenpulver mit einer Korngröße von bis zu 2 mm oder auch mit einer Korngröße von bis zu 4 mm je nach Bedarf nachdüngen.

In einer weiteren Ausführungsform wird die der Erfindung zugrunde liegende Aufgabe gelöst durch ein Kultur-Substrat, enthaltend wenigstens 15 Vol.% der erfindungsgemäßen Kompostzusammensetzung. Kultur-Substrat im Sinne der Erfindung umfasst auch Blumenerdezusammensetzungen, Hobbyerdezusammensetzung und Verkaufserdezusammensetzungen, wie sie üblicherweise abgepackt zum Verkauf angeboten werden.

In einer wiederum weiteren Ausführungsform wird die der Erfindung zugrunde liegende Aufgabe gelöst durch eine Erdzusammensetzung enthaltend wenigstens 1 Vol.% der erfindungsgemäßen Kompostzusammensetzung. Hierbei handelt es sich bei der Erde beispielsweise um Mutterboden oder auch Gartenboden. Beispielsweise kann in der erfindungsgemäßen Erdzusammensetzung auch wenigstens 2 Vol.%, insbesondere wenigstens 30 Vol.% der erfindungsgemäßen Kompostzusammensetzung enthalten sein.

### Ausführungsbeispiele:

Zunächst wurden im Handel erhältliche Kakaoschalen wie beispielsweise das Produkt CACOA^{®} der Firma Theresia U. Bräutigam weiter vermahlen und anschließend mit einem Sieb mit einer Lochweite von 2 mm gesiebt. Anschließend wurde noch ein Pulver aus Kakaoschalen zusammengestellt, wobei je nach Verwendung 65 Gewichtsteile des gesiebten Pulvers mit einer Korngröße von unterhalb 2 mm eingesetzt wurde und 35 Gewichtsteile des Rückstandes im Sieb eingesetzt wurden.

Es wurde also erfindungsgemäßes Pulver aus Kakaoschalen hergestellt. Zusätzlich wurde auch ein Pulver hergestellt, bei dem die Korngröße bis zu 8 mm eingestellt war und das im Übrigen mit dem vorgenannten Pulver übereingestimmt hat.

Es wurde ein Test mit handelsüblicher Blumenerde und Gartenbeet angelegt. In die Hälfte dieses Tests wurden 100 g erfindungsgemäßes Pulver aus Kakaoschalen pro m² eingearbeitet und anschließend Gemüse-, Kräuter- und Blumensamen ausgesät und diese Pflanzen auch gepflanzt. Es konnte beobachtet werden, dass die mit dem erfindungsgemäßen Pulver aus Kakaoschalen gedüngten Flächen wesentlich kräftiger keimten und auch schneller angewachsen sind.

Um eine erfindungsgemäße Kompostzusammensetzung zu erhalten, wurden 2 Gewichtsteile erfindungsgemäßes Pulver aus Kakaoschalen, 2 Gewichtsteile gemahlene Kakaoschalen mit einer Korngröße von mehr als 5 mm und bis zu 8 mm, etwa 0,5 Gewichtsteile silikatische Mineralien mit Calciumhydroxid, 95,5 Gewichtsteile handelsüblicher Substratkompost miteinander gründlich vermischt und mit etwa 40 g mikroporösem in Wasser dispergiertem Ton pro Kubikmeter Kompost abgegossen. Anschließend wirkten die einzelnen Komponenten eine Weile aufeinander ein und wurden dazu noch einige Male umgesetzt. Diese Kompostzusammensetzung hatte einen Salzgehalt von 1,4 g/l.

Aus dieser erfindungsgemäßen Kompostzusammensetzung wurde anschließend erfindungsgemäßes Kultursubstrat dadurch erhalten, dass man bis 55 Vol.% erfindungsgemäße Kompostzusammensetzung und wenigstens 45 Vol.% Torf miteinander vermischt hat. Der Torf, der von Natur aus bei einem pH-Wert von etwa 3,5 liegt, wurde mit Calciumhydroxid (Ausgangsbasis gelöschter Kalk) abgestreut bis ein pH-Wert von 6,2 erreicht war. Dieser Kalktyp wurde von den Pflanzen besser aufgenommen und hat während der Kulturzeit den pH-Wert besser stabilisiert.

Unabhängig davon wurde auch eine erfindungsgemäße Erdzusammensetzung erhalten, dadurch das man 95 Vol.% handelsüblichen Gartenboden und 5 Vol.% erfindungsgemäße Kompostzusammensetzung miteinander gründlich vermengt hat.

Wieder wurden sowohl mit dem Kultursubstrat als auch der Erdzusammensetzung ein Test in einem Gartenbeet wie vorbeschrieben angelegt, auf denen Gemüse-, Kräuter- und Blumensamen ausgesät und diese Pflanzen auch gepflanzt wurden. Zum Vergleich wurde handelsübliches Kultursubstrat und einfacher Gartenboden für ein Vergleichsbeet genommen und dort auch Gleiches ausgesät und gepflanzt.

Wieder zeigte sich, dass auf dem erfindungsgemäßen Kultursubstrat und der erfindungsgemäßen Erdzusammensetzung die Samen deutlich kräftiger keimten und die Keimlinge deutlich schneller anwuchsen.

## Patentansprüche

1. Verwendung von Pulver aus Kakaoschalen als Pflanzendünger oder Bestandteil von Pflanzendünger, wobei das Pulver zu wenigstens 5 Gew.% eine Korngröße von bis zu 5 mm aufweist.

2. Pflanzendünger, enthaltend Pulver aus Kakaoschalen, wobei das Pulver zu wenigstens 5 Gew.% eine Korngröße von bis zu 5 mm aufweist.

3. Kompostzusammensetzung, enthaltend
a) Frischkompost, Fertigkompost oder Substratkompost, und
b) wenigstens 0,5 Gew.% Pulver aus Kakaoschalen, wobei das Pulver zu wenigstens 20 Gew.% eine Korngröße von bis zu 5 mm aufweist.

4. Kompostzusammensetzung gemäß Anspruch 3, **dadurch gekennzeichnet, dass** sie zusätzlich auch gemahlene Kakaoschalen mit einer Korngröße von mehr als 5 mm bis zu 8 mm in einem Bereich von 5 bis 30 Gew.% enthält.

5. Kompostzusammensetzung gemäß einem der Ansprüche 3 oder 4, **dadurch gekennzeichnet, dass** sie wenigstens 0,2 Gew.%, insbesondere wenigstens 0,5 Gew.% gemahlenen Granit und/oder silikatische Mineralien enthält.

6. Kompostzusammensetzung gemäß einem der Ansprüche 3 bis 5, **dadurch gekennzeichnet, dass** sie wenigstens 0,5 Gew.% Calciumhydroxid enthält.

7. Kompostzusammensetzung gemäß einem der Ansprüche 3 bis 6, **dadurch gekennzeichnet, dass** sie wenigstens 1 Gew.% mikroporösen Ton enthält.

8. Kompostzusammensetzung gemäß einem der Ansprüche 3 bis 7, **dadurch gekennzeichnet, dass** sie einen Salzgehalt von höchstens 2,4 g/l, insbesondere höchstens 2g/l, ganz besonders bevorzugt höchstens 1,5 g/l aufweist.

9. Kultursubstrat, enthaltend wenigstens 15 Vol.% der Kompostzusammensetzung gemäß einem der Ansprüche 3 bis 8.

10. Erdzusammensetzung, enthaltend wenigstens 1 Vol.% der Kompostzusammensetzung gemäß einem der Ansprüche 3 bis 8.

## Geänderte Patentansprüche

### Geänderte Patentansprüche gemäss Regel 137(2) EPÜ.

**1.** Verwendung von Pulver aus Kakaoschalen als Pflanzendünger, wobei das Pulver zu wenigstens 5 Gew.% eine Korngröße von bis zu 5 mm aufweist.

**2.** Kompostzusammensetzung, enthaltend
a) Frischkompost, Fertigkompost oder Substratkompost, und
b) wenigstens 0,5 Gew.% Pulver aus Kakaoschalen, wobei das Pulver zu wenigstens 20 Gew.% eine Korngröße von bis zu 5 mm aufweist, wobei der Salzgehalt höchstens 2,4 g/l beträgt.

**3.** Kompostzusammensetzung gemäß Anspruch 2, **dadurch gekennzeichnet, dass** sie zusätzlich auch gemahlene Kakaoschalen mit einer Korngröße von mehr als 5 mm bis zu 8 mm in einem Bereich von 5 bis 30 Gew.% enthält.

**4.** Kompostzusammensetzung gemäß einem der Ansprüche 2 oder 3, **dadurch gekennzeichnet, dass** sie wenigstens 0,2 Gew.%, insbesondere wenigstens 0,5 Gew.% gemahlenen Granit und/oder silikatische Mineralien enthält.

**5.** Kompostzusammensetzung gemäß einem der Ansprüche 2 bis 4, **dadurch gekennzeichnet, dass** sie wenigstens 0,5 Gew.% Calciumhydroxid enthält.

**6.** Kompostzusammensetzung gemäß einem der Ansprüche 2 bis 5, **dadurch gekennzeichnet, dass** sie wenigstens 1 Gew.% mikroporösen Ton enthält.

**7.** Kompostzusammensetzung gemäß einem der Ansprüche 2 bis 6, **dadurch gekennzeichnet, dass** sie einen Salzgehalt von höchstens 2,4 g/l, insbesondere höchstens 2g/l, ganz besonders bevorzugt höchstens 1,5 g/l aufweist.

**8.** Kultursubstrat, enthaltend wenigstens 15 Vol.% der Kompostzusammensetzung gemäß einem der Ansprüche 2 bis 7.
